# EUROPÄISCHE PATENTANMELDUNG

(11) **EP 4 371 764 A1**
(43) Veröffentlichungstag der Anmeldung: **22.05.2024**
(21) Anmeldenummer: 23210492.7
(22) Anmeldetag: 17.11.2023
(51) Int. Cl.: B32B 7/12, B32B 9/00, B32B 15/20, B32B 9/04, B32B 15/08, B32B 15/10, B32B 21/08, B32B 27/38

(54) **VERBUNDELEMENT ENTHALTEND EINE SANDWICHPLATTE**

(30) Priorität: 18.11.2022 CH 13772022
(71) Anmelder: Coratec AG, 4617 Gunzgen (CH)
(72) Erfinder: Zurflüh, Philipp, 4617 Gunzgen (CH)
(74) Vertreter: Bohest AG

(57) **Zusammenfassung**

Ein Verbundelement (1), umfassend a) eine Sandwichplatte (2), die ihrerseits umfasst oder besteht aus: a1) einem Kern (21) mit einer ersten Kernoberfläche (211) und einer zweiten Kernoberfläche (212), a2) einer auf der ersten Kernoberfläche (211) aufgebrachten ersten Deckschicht (31) und a3) einer auf der zweiten Kernoberfläche (212) aufgebrachten zweiten Deckschicht (32); und b) einer auf der zweiten Deckschicht (32) aufgetragenen Haftvermittlerschicht (42) mit einem acrylathaltigen Binderpolymer oder einem aus i) einem isocyanathaltigen Monomeren, Oligomeren oder Polymeren und ii) einem amingruppenhaltigen Monomeren, Oligomeren oder Polymeren erhaltenen Binderpolymer. Die erste Deckschicht (31) kann eine Dekorschicht sein oder es kann auf der ersten Deckschicht (31) eine zusätzliche Dekorschicht (41) angebracht sein. Das Verbundelement eignet sich insbesondere für die Beschichtung von Böden, Wänden und Decken aus einem mineralischen Untergrund, etwa aus Ziegelstein oder Beton. Hierzu wird das fertige Verbundelement (1) über die Haftvermittlerschicht (42) unter Verwendung eines zementösen Mörtels (8a) auf dem mineralischen Untergrund (5) befestigt.

## Beschreibung

Die vorliegende Erfindung betrifft ein Verbundelement enthaltend eine Sandwichplatte und seine Verwendung unter anderem im Bausektor.

### Hintergrund

Im Bausektor steht man oft vor der Aufgabe, einen zunächst optisch nicht ansprechenden Untergrund, etwa eine Beton- oder Ziegelsteinmauer, oder einen Betonboden oder eine Betondecke, mit einer optisch ansprechenderen Verkleidung zu versehen. Übliche Verkleidungen sind das Verputzen oder Gipsen oder die Belegung mit Fliesen. Diese Verkleidungsarten erlauben aber nur begrenzte Gestaltungsmöglichkeiten. Bei Fliesen kann das Gewicht ein Problem werden. Andererseits sind im Bausektor und auch im Fahrzeugbau sogenannte Sandwichplatten als Verkleidungselemente bekannt. Sandwichplatten bestehen aus einen leichten Kern, etwa aus einem Kunststoff, auf den verschiedene Deckschichten, so auch Dekorschichten, aufgetragen werden. Die Anmelderin der vorliegenden Anmeldung vertreibt zum Anmeldezeitpunkt solche Sandwichplatten auf dem Markt. Ein weiterer Anbieter solcher Sandwichplatten ist die Firma CosmoTech. Solche Sandwichplatten werden üblicherweise mit mechanischen Befestigungssystemen, also etwa mit Schrauben, Haltekrallen oder Nieten, auf dem zu verkleidenden Untergrund befestigt. Es gibt eine grosse Anzahl von Patentpublikationen, die verschiedenste Arten solcher Sandwichplatten offenbaren. Beispielhaft wird hier nur auf die US 2015/0336356 A1 und die WO 2017/016833 A1 verwiesen.

In der DE 10 2020 121979 A1 wird ein Mehrschicht-Verbundsystem zur Vorbehandlung eines mit einem Bauelement zu verbindenden Untergrundes beschrieben. Das Bauelement ist insbesondere ein Kunststoffrohr und der Untergrund insbesondere ein Betonuntergrund. Das Mehrschicht-Verbundsystem umfasst zur Anhaftung an den Untergrund eine Adhäsivschicht, die u.a. Acrylat oder ein Acrylat enthaltendes Gemisch sein kann.

Die vorliegende Erfindung setzt sich zum Ziel, ein Verbundelement bereitzustellen, das als Verkleidung für senkrechte und liegende mineralische Untergründe, insbesondere als im Bausektor als Fliesenersatz, verwendbar ist.

Die Aufgabe wird erfindungsgemäss gelöst durch ein Verbundelement, umfassend
a) eine Sandwichplatte, die ihrerseits umfasst oder besteht aus:
   a1) einem Kern mit einer ersten Kernoberfläche und einer zweiten Kernoberfläche,
   a2) einer auf der ersten Kernoberfläche aufgebrachten ersten Deckschicht und
   a3) einer auf der zweiten Kernoberfläche aufgebrachten zweiten Deckschicht;
b) einer auf der zweiten Deckschicht aufgetragenen Haftvermittlerschicht mit einem acrylathaltigen Binderpolymer oder einem aus i) einem isocyanathaltigen Monomeren, Oligomeren oder Polymeren und ii) einem amingruppenhaltigen Monomeren, Oligomeren oder Polymeren erhaltenen Binderpolymer.

Bevorzugte Ausführungsformen des erfindungsgemässen Verbundelements ergeben sich aus den abhängigen Ansprüchen und der folgenden Beschreibung.

Es wurde überraschenderweise gefunden, dass wässerige Dispersionen, die ein acrylathaltiges Binderpolymer oder ein aus isocyanathaltigem Monomeren, Oligomeren oder Polymeren und aus amigruppenhaltigem Monomeren, Oligomeren oder Polymeren erhaltenes Binderpolymer enthalten, und die üblicherweise etwa in der Malerei oder als Klebstoff verwendet werden, sich auch zur Haftungsvermittlung zwischen Kunststoffen oder Metallen, wie sie üblicherweise in den Deckschichten von Sandwichplatten der eingangs erwähnten Form auftreten, und zementösen Mörteln sowohl im nicht abgebundenen als auch im ausgehärteten Zustand eignen.

### Kurze Beschreibung der Figuren

- Fig.1: zeigt ein erfindungsgemässes Verbundelement als Beschichtung auf einem senkrechten mineralischen Untergrund;
- Fig. 2: zeigt schematisch ein Verfahren zum Beschichten eines senkrecht stehenden mineralischen Untergrunds mit einem erfindungsgemässen Verbundelement.

### Genaue Beschreibung der Erfindung

Der Begriff "Sandwichplatte" impliziert im Rahmen der vorliegenden Anmeldung, wie fachüblich, dass ein Kern und zwei den Kern einschliessende Deckschichten vorhanden sind.

Die erfindungsgemäss einsetzbaren Sandwichplatten sind von ihrem Aufbau her bevorzugt auf hohe Biegesteifigkeit bei tiefem Gewicht ausgelegt. Um eine möglichst gute Wirkung zu erzielen, werden die darin enthaltenen Deckschichten bevorzugt möglichst steif auf Zug- und Druck und der Kern bevorzugt steif auf Schub ausgelegt. Wird eine solche Sandwichplatte belastet, nehmen die Deckschichten die entstehenden Zug- und DruckSpannungen und der Kern die Schubspannungen auf.

Der Kern im erfindungsgemässen Verbundelement ist, abgesehen von der Erfüllung der vorstehend erwähnten hauptsächlichen Zwecke, nicht kritisch. Er kann insbesondere als Material folgendes umfassen oder daraus bestehen:
- Thermoplasten (wie Polyethylen; Polypropylen; Ethylen-α-Olefin-Copolymere, wobei das α-Olefin aus 1-Propen, 1-Buten, 1-Penten, 1-Hexen, 1-Hepten und 1-Octen ausgewählt ist; Polyvinylalkohol; Polyester, insbesondere PET; EVA; PVC; Polyamid; Polystyrol; Polyalkylenoxid)
- thermoplastischen Elastomeren, wie insbesondere TPU,
- Duroplasten (wie Epoxyharze; Phenol-Formaldehydharze; Melamin-Formaldehyd-Harze, Polyurethan), allenfalls mit Faserverstärkung, wobei die Fasern aus Glas, Carbon, Aramid und Bitumen ausgewählt sein können, oder allenfalls mit Holzspanbeimengung (wie etwa MDF);
- Hölzer.

Die Dicke des Kernwerkstoffs kann basierend auf Anforderungen bezüglich den mechanischen Eigenschaften (Biegesteifigkeit), der Isolation (thermisch, akustisch, Feuerwiderstand) oder äusseren masslichen Zwängen gewählt werden. Die Dicke kann beliebig sein; in einer bevorzugten Ausführungsform, etwa beim Einsatz in einem erfindungsgemässen Verbundelement in Form einer Wand- oder Deckenverkleidungsplatte, hat der Kern hat eine typische Dicke von 1 bis 50 mm, bevorzugt 2 bis 20 mm. Der Kern kann massiv oder allenfalls zur Gewichtsersparnis geschäumt sein, d.h. er liegt als Hartschaum vor. Die Schäumung von Kunststoffen mittels chemischer oder physikalischer, endothermer oder exothermer Schäumungsmittel ist fachüblich und bedarf keiner weiteren Erläuterung. Wenn der Kern geschäumt ist, ist der Schäumungsgrad, berechnet als Quotient von Dichte des geschäumten Kernmaterials zu Dichte des ungeschäumten Kernmaterials, bevorzugt im Bereich von 0.1 bis 0.5. Ein Kern aus einem geschäumten Polyester, insbesondere einem geschäumten PET, weist bevorzugt eine Dichte von 30 bis 300 kg/m³ auf. Besonders besteht der Kern aus einem geschäumten Polyester, insbesondere einem geschäumten PET, mit einer Dichte in dem vorstehend erwähnten Bereich, oder aus einem extrudierten Polystyrol. Der Kern kann auch in Form einer steifen Wabenstruktur (honey comb) vorliegen. Die Herstellung von Schichten mit Wabenstrukturen ist ebenfalls fachüblich und bedarf keiner weiteren Erläuterung.

Die erste Deckschicht ist normalerweise diejenige Schicht des erfindungsgemässen Verbundelementes, die in seinem auf den mineralischen Untergrund applizierten Zustand von diesem Untergrund hinweg schaut. Die erste Deckschicht kann einerseits eine Dekorschicht mit einer typischen Dicke von 0,1 bis 5 mm sein. Diese Dekorschicht kann eine selbstklebende Dekorfolie, etwa auf Basis von PVC, eine Tapete, ein Holzfurnier, ein Laminat, oder eine aus natürlichen Materialien herausgeschnittene oder herausgesägte Dünnschicht, z.B. ein Steinfurnier, sein; Letzteres ist bevorzugt. Steinfurniere sind im Handel erhältlich, etwa von SkinRock, Slate-Lite, FelsWond oder China Stones. Alternativ kann die erste Deckschicht aus Hochdrucklaminat (high pressure laminate HPL), Aluminiumblech (Reinaluminium, ISO-Nummern Al99.5 oder AL99.7 oder als Legierung etwa mit den ISO-Nummern AlCu4MgSi, AICu4Mg1, AICu2MgNi, AIMn1Cu, AlMg06, AIMg4.5Mn, AIMg1SiCu, AlSiMg07, AlZn4.5Mg oder AlZn5.5MgCu; Oberflächen walzblank, angeschliffen oder aufgerauht, pulverbeschichtet oder eloxiert), aus den oben für den Kern exemplifizierten faserverstärkten Materialien oder aus Thermoplasten (etwa PVC, Polyethylen oder Polypropylen) bestehen.

Wenn die erste Deckschicht nicht selber direkt eine Dekorschicht ist, kann eine solche Dekorschicht gewünschtenfalls mit einem geeigneten Klebstoff an der ersten Deckschicht (die dann etwa aus den oben beschriebenen Materialien besteht) als äusseste, der Umgebung zugewandte Lage angebracht werden.

Die zweite Deckschicht ist normalerweise diejenige Schicht des erfindungsgemässen Verbundelementes, die in seinem auf den mineralischen Untergrund applizierten Zustand zu diesem Untergrund hinschaut. Die zweite Deckschicht kann aus denselben Materialen bestehen wie sie oben für die erste Deckschicht, die nicht selber eine Dekorschicht ist, exemplifiziert wurden. Im Falle, wo die zweite Deckschicht aus Aluminium oder seiner Legierungen besteht, kann eine Pulverbeschichtung oder das Anschleifen oder eine mechanische Aufrauhung die Oberflächenaktivität erhöhen und die Haftung des Haftvermittlers auf der Oberfläche der zweiten Deckschicht verbessern. Hingegen wurde gefunden, dass eine oxidative Behandlung wie die Eloxierung oder eine nachträgliche Nasslackierung der Oberfläche der zweiten Deckschicht mit einem Primer, etwa auf Epoxyharzbasis, die Haftung des Haftvermittlers auf der zweiten Deckschicht nicht notwendigerweise verbessern. Die bevorzugten Oberflächenbeschaffenheiten im Falle der zweiten Deckschicht aus Aluminium oder seinen besagten Legierungen sind also walzblank, angeschliffen, mechanisch aufgerauht oder pulverbeschichtet, aber ohne oxidative Nachbehandlung (z.B. Eloxierung) und ohne nachträgliche Primer-Beschichtung.

Die erfindungsgemäss einsetzbaren acrylhaltigen oder isocyanathaltigen Binderpolymere für die Haftvermittlerschicht sind an sich z.B. in der Malerei bekannt. Sie dienten dort als Grundierung für einen festen mineralischen Untergrund, oder bildeten die Grundlage von Farben. Die erfindungsgemäss einsetzbaren Haftvermittler enthalten ein organisches acrylhaltiges Binderpolymer oder ein aus einem isocyanathaltigen Monomeren, Oligomeren oder Polymeren und aus einem amingruppenhaltigen Monomeren, Oligomeren oder Polymeren erhaltenes Binderpolymer, das in den auf dem Gebiet der Malerei vorbekannten wässerigen Dispersionen die Funktion eines Filmbildners und/oder Pigmentdispergierers hat. Der Haftvermittler wird in Form einer wässerigen Dispersion bei der Herstellung des erfindungsgemässen Verbundelements eingesetzt. Diese Dispersion enthält typisch neben den besagten Binderpolymeren die folgenden weitere Bestandteile, die die Verarbeitbarkeit der wässerigen Dispersion und/oder die Eigenschaften der fertigen Haftvermittlerschicht oder verbessern:
i) Mineralischen Füllstoffe, wie etwa Talkum, Kreide, Magnesiumcarbonat (Magnesit), Calciumcarbonat und Calciumsulfat, in Mengen von typisch 10 bis 40 Gew.-% der wässerigen Dispersion.
ii) Entschäumer und Entlüfter (air release agents), insbesondere aliphatische C₆-C₁₀-Alkohole oder Polysiloxane, in Mengen von typisch 0,1 bis 2,0 Gew.-%, bezogen auf die wässerige Dispersion.
iii) Oberflächenaktive Mittel, wie anionische, nichtionische und kationische Tenside. Bevorzugte anionische Tenside sind Natrium- und Ammoniumsalze von (C₈ -C₂₀)-Alkylsulfonsäuren und von Schwefelsäurehalbestern ethoxylierter (C₁₀-C₂₀)-Alkanole (Ethoxylierungsgrad: 2 bis 50). Bevorzugte nichtionische Tenside sind aliphatische nichtionische Ethoxylate von (C₈-C₃₆)-Alkoholen (Ethoxylierungsgrad: 3 bis 50) und Polyethylenoxid/Polypropylenoxid-Blockcopolymere. Bevorzugte kationische Tenside sind quarternäre Ammoniumverbindungen der Formel R₁R₂R₃R₄N⁺ X⁻, worin eines oder zwei von R₁, R₂, R₃ und R₄ ein (C₁₀-C₂₀)-Alkylrest ist und die restlichen von R₁, R₂, R₃ und R₄ Methyl sind. Es können Mischungen von einem anionischen und einem kationischen, von einem anionischen und einem nichtionischen, und von einem kationischen und einem nichtionischen Tensid eingesetzt werden. Die Gesamtmenge der Tenside ist typischerweise 0,1 bis 5 Gew.-%, bezogen auf die wässerige Dispersion.
iv) Verdickungsmittel, wie etwa mikrokristalline Cellulose, Hydroxyethylcellulose, Hydroxypropylmethylcellulose, Natrium-Carboxymethylcellulose, Gummen und Xanthanharze; in totaler Menge von typisch 5 bis 30 Gew.-%, bezogen auf die wässerige Dispersion;
v) Konservierungsmittel, wie etwa 1,2-Benzothiazol-3-on, 5-Chlor-2-methyl-isothiazolin-3-on, 2-Methyl-4-isothiazolin-3-on; in totaler Menge von typisch 0,1 bis 2 Gew.-%, bezogen auf die wässerige Dispersion.
vi) Wasser als Differenz zu mindestens 98%, bevorzugt 100%, der wässerigen Dispersion.

Die acrylhaltigen Binderpolymere und die einem aus einem isocyanathaltigen Monomeren, Oligomeren oder Polymeren und aus einem amingruppenhaltigen Monomeren, Oligomeren oder Polymeren erhaltenen Binderpolymere werden im Folgenden beschrieben.

Die acrylhaltigen Binderpolymere sind Polymere oder Copolymere, die typischerweise repetitive Einheiten enthalten, die abgeleitet sind von (Gewichtsprozente sind auf das Gewicht des Polymeren oder Copolymeren bezogen):
a) 1 bis 60 Gew.-% (Meth)acrylsäure, insbesondere Acrylsäure;
b) 1 bis 60 Gew.-% von einem oder mehreren (C₁-C₄)-Alkylestern der (Meth)acrylsäure, die bevorzugt aus der Gruppe bestehend aus Methyl(meth)acrylat, Ethyl(meth)acrylat, n-Propyl(meth)acrylat, n-Butyl(meth)acrylat, Isobutyl(meth)acrylat und tert.-Butyl(meth)acrylat ausgewählt sind, insbesondere Methylacrylat und/oder Methylmethacrylat;
c) 0 bis 20 Gew.-% von einem oder mehreren vinylaromatischen Monomeren, die bevorzugt aus der Gruppe bestehend aus Styrol, o-, m- und p-(C₁-C₄)-Alkylstyrole (wie Methylstyrole und tert.-Butylstyrol) und o-, m- und p-(C₁-C₄)-Alkoxystyrole (wie Methoxystyrole) ausgewählt sind, wobei als vinylaromatisches Monomer Styrol alleine bevorzugt ist; und
d) 0 bis 20 Gew.-% eines oder mehrerer amid- und/oder nitrilhaltiger vinylischer Monomere, insbesondere ausgewählt aus Acrylamid, Methacrylamid und Acrylnitril;
mit der Massgabe, dass die Summe der Gewichtsprozente der Monomeren a)-d) 100% des acrylathaltigen Binderpolymeren ergibt.

Vorzugsweise ist das acrylathaltige Binderpolymer aus repetitiven Einheiten aufgebaut, die zu 20 bis 50 Gew.-% von Monomeren a), insbesondere von Acrylsäure; zu 10 bis 50 Gew.-% von Methylacrylat und/oder Methylmethacrylat; zu 0 bis 20 Gew.-% von Monomeren c), insbesondere Styrol; und zu 0 bis 20 Gew.-% Acrylnitril abgeleitet sind; wiederum mit der Massgabe, dass die Summe der Gewichtsprozente der Monomeren 100% des Polymeren ergibt.

Ein besonders bevorzugter Haftvermittler enthält ein acrylathaltiges Binderpolymer in Form eines Copolymeren von Acrylsäure mit einem oder mehreren obigen unter b)-d) aufgeführten Comonomeren in Kombination mit Magnesiumcarbonat (Magnesit) als Füllstoff

Eine wässerige Dispersion mit acrylathaltigen Polymeren oder Copolymeren wird nach dem Auftragen auf die zweite Deckschicht zur Bildung der fertigen Haftvermittlerschicht bis zu einem bestimmten, frei wählbaren Trocknungsgrad bei etwa Raumtemperatur, also 18°C bis 25°C, eintrocknen gelassen.

Die aus einem isocyanathaltigen Monomeren, Oligomeren oder Polymeren und aus einem amingruppenhaltigen Monomeren, Oligomeren oder Polymeren erhaltenen Binderpolymere sind zunächst ein- oder zweikomponentige Systeme, die enthalten:
i) mindestens ein isocyanathaltiges Monomer, Präpolymer oder Polymer als erste Komponente, wobei die Isocyanatgruppen teilweise deaktiviert sein können; und
ii) als zweite Komponente mindestens ein Monomer, Präpolymer oder Polymer mit isocyanatreaktiven Aminogruppen.

Das isocyanathaltige Monomer als Komponente i) ist ein Di- oder Polyisocyanat, etwa ein (C₆-C₁₀)-aromatisches oder ein (C₄-C₁₆)-aliphatisches Di-, Tri-, oder Polyisocyanat. Unter "aromatisches Polyisocyanat" wird hierbei ein Polyisocyanat verstanden, bei welchem die NCO-Gruppen direkt an einem aromatischen Grundkörper hängen, während unter einem "aliphatischen Polyisocyanat" ein Polyisocyanat verstanden wird, bei welchem die NCO-Gruppen nicht direkt an einem aromatischen Grundkörper hängen. Es kommen besonders die Polyisocyanate aus der folgenden Liste in Betracht: 2,4- und 2,6-Toluylendiisocyanat (TDI) und beliebige Gemische dieser Isomeren; 4,4'-Diphenylmethandiisocyanat (MDI), die stellungsisomeren Diphenylmethandiisocyanate; Di- und Tetraalkyl-Diphenylmethandiisocyanate; 4,4'-Dibenzyldiisocyanat, 1,3- und 1,4-Phenylendiisocyanat; die Isomeren des Naphtylendiisocyanates, Xylylendiisocyanate, Triphenylmethantriisocyanate und deren Isomerenmischungen; Tris(p-isocyanatophenyl)thiophosphat (erhältlich z.B. als Desmodur RFE von Bayer); Hexamethylendiisocyanat (HDI), 2,2,4- und 2,4,4-Trimethyl-1,6-Hexamethylendiisocyanat, Tetramethoxybutan-1,4-diisocyanat, Butan-1,4-diisocyanat, Dicyclohexylmethandiisocyanat, Cyclohexan-1,3- und -1,4-diisocyanat, 1,12-Dodecamethylendiisocyanat, Diisocyanate von dimeren Fettsäuren; 1-Isocyanato-3,3,5-trimethyl-5-isocyanatomethyl-cyclohexan (=Isophorondiisocyanat oder IPDI), hydriertes Diphenylmethandiisocyanat und hydriertes 2,4- und 2,6-Toluylendiisocyanat. Das isocyanathaltige Oligomer oder Polymer als Komponente i) ist erhältlich durch Reaktion von mindestens einem Di- oder Polyisocyanat wie vorstehend exemplifiziert und mindestens einem Di- oder Polyol. Diese Reaktion kann unter Verwendung üblicher Reaktionsbedingungen bei 50-100°C unter Verwendung üblicher Katalysatoren durchgeführt werden. Das Mengenverhältnis Di-/Polyisocyanat:Polyol ist vorzugsweise dergestalt, dass ein NCO/OH-Verhältnis im Bereich von 1,5:1 bis 6:1, eher bevorzugt im Bereich 1.5:1 bis 3:1 vorliegt..

Das zur Herstellung des isocyanathaltigen Oligomers oder Polymers als Komponente i) verwendete Di- oder Polyol ist vorzugsweise ein Diol oder eine Mischung aus mindestens einem Diol und mindestens einem Triol, insbesondere eine Mischung aus mindestens einem Diol und mindestens einem Triol. Eher bevorzugt ist es ausgewählt aus der Liste bestehend aus Polyoxyalkylenpolyol, Polyesterpolyol, Polycarbonatpolyol, Polyacrylatpolyol und Diol-Kettenverlängerer. Besonders bevorzugt sind Polycarbonatpolyole, Polyoxyalkylenpolyole, insbesondere Polyoxybutylenpolyole, Polyoxypropylenpolyole und gemischte Polyoxyethylen-Polyoxypropylenpolyole und Diolkettenverlängerer. Ein "Diol-Kettenverlängerer" bezieht sich auf ein organisches Diol, das kein Polymer ist. Der Diol-Kettenverlängerer ist vorzugsweise ein aliphatisches oder cycloaliphatisches Diol mit einem Molekulargewicht im Bereich von 60 bis 200 g/mol. Vorzugsweise enthält der Diol-Kettenverlängerer mindestens eine primäre Hydroxylgruppe, stärker bevorzugt zwei primäre Hydroxylgruppen. Am bevorzugtesten ist der Diol-Kettenverlängerer 1,4-Butandiol. Ganz besonders bevorzugt handelt es sich bei den eingesetzten Polyolen um eine Mischung aus mindestens einem Diol-Kettenverlängerer, insbesondere 1,4-Butandiol, und Polyoxyalkylenpolyolen. Vorzugsweise beträgt das Gewichtsverhältnis zwischen den Polyoxyalkylenpolyolen und dem mindestens einen Diol-Kettenverlängerer 40:1 bis 80:1, vorzugsweise 50:1 bis 70:1, stärker bevorzugt 55:1 bis 60:1. Besonders bevorzugt sind mehr als 70 Gew.-%, mehr als 80 Gew.-%, mehr als 90 Gew.-%, insbesondere mehr als 95 Gew.-% der eingesetzten Polyole ausgewählt aus der Liste bestehend aus mindestens ein Diol-Kettenverlängerer und Polyoxyalkylenpolyole, insbesondere eine Mischung davon.

Das mittlere Molekulargewicht des Polyols ohne Berücksichtigung des Diol-Kettenverlängerers beträgt vorzugsweise 500-20000 g/mol, insbesondere liegt es im Bereich von 1000 bis 8000 g/mol. Diese Molekulargewichte werden für die Zwecke der Erfindung mittels Gelpermeationschromatographie bestimmt.

Das massengemittelte Molekulargewicht des isocyanathaltigen Oligomeren als Komponente i) liegt bevorzugt im Bereich von 2000 bis 10000 g/mol, dasjenige des isocyanathaltigen Polymeren als Komponente i) bevorzugt im Bereich von 10000 bis 20000 g/mol Diese massengemittelten Molekulargewichte werden für die Zwecke der Erfindung mittels Gelpermeationschromatographie bestimmt. Das ist für die Zwecke der Erfindung die Unterscheidung zwischen Oligomer und Polymer als Komponente i).

Die Isocyanatgruppen sind an sich bereits bei Raumtemperatur mit dem Wasser der Dispersion reaktionsfähig. Um zu verhindern, dass das isocyanathaltige Monomer, Oligomer oder Polymer bereits in der Dispersion abreagiert, kann dieses einerseits erst unmittelbar vor Gebrauch in der wässerigen Dispersion dispergiert werden, etwa in vorgängig feinteilig (mittlerer "mass median aerodynamic diameter", MMAD-Durchmesser, im Bereich von 10 bis 200 µm) pulverisierter Form (wenn bei Raumtemperatur fest) oder direkt (wenn bei Raumtemperatur flüssig), und unter Zuhilfenahme eines üblichen Dispergiermittels, etwa einem Tensid. Das wäre ein zweikomponentiges System. Alternativ kann das isocyanathaltige Monomer, Präpolymer oder Polymer, insbesondere wenn es bei Raumtemperatur fest ist, in feinteilig (siehe vorstehend) pulverisierter Form vorgängig an der Oberfläche der Partikel mit einem isocyanatdeaktivierenden Mittel, etwa einem niedermolekularen Amin umgesetzt werden, so dass die Partikel des isocyanathaltigen Monomeren, Präpolymeren oder Polymeren an der Oberfläche durch eine deaktivierte Schicht vor dem Wasser der Dispersion geschützt sind. Der Anteil deaktivierter Isocyanatgruppen im Verhältnis zur Gesamtzahl der Isocyanatgruppen ist klein, typisch weniger als 5% oder im Bereich von 1% bis 5%. Dabei wird der Isocyanatgruppengehalt der Partikel vor und nach der Oberflächendeaktivierung bestimmt und aus der Differenz, ins Verhältnis gesetzt zum Isocyanatgruppengehalt vor Deaktivierung, der besagte Anteil bestimmt. Dieser Anteil ist recht unabhängig von der Messmethode zur Messung des Gehalts der Isocyanate. Die so oberflächendeaktivierten Partikel der Komponente i) reagieren in einkomponentiger wässeriger Dispersion mit der Komponente ii) zunächst nicht; eine Vernetzung tritt erst beim Verdunsten des Dispersionswassers ein. Dieses Verfahren der Oberflächendeaktivierung der Isocyanatpartikel ist an sich auf dem Gebiet der Isocyanatdispersionen fachüblich und bekannt. Es wird beispielhaft auf die EP 1 172 390 A1 verwiesen.

Das mindestens eine Monomer mit isocyanatreaktiven Aminogruppen als Komponente ii) ist mindestens ein Di- oder Polyamin mit einem Molekulargewicht im Bereich von 60 bis 500 g/mol, insbesondere 60 bis 400 g/mol. Diese kleinen Molekulargewichte können direkt aus der chemischen Formel des Di- oder Polyamins berechnet werden oder wie oben mittels Gelpermeationschromatographie bestimmt werden. Das Di- oder Polyamin ist vorzugsweise aromatisch, insbesondere ein aromatisches Polyamin ausgewählt aus der Liste bestehend aus m-Phenylendiamin, p-Phenylendiamin, 4,4'-, 2,4'- und/oder 2,2'-Diaminodiphenylmethan, 3, 3'-Dichlor-4,4'-diaminodiphenylmethan (MOCA), 2,4- und/oder 2,6-Toluylendiamin, Mischungen aus 3,5-Dimethylthio-2,4- und -2,6-tolylendiamin, Mischungen aus 3,5-Diethyl-2,4- und -2,6-tolylendiamin (DETDA), 3,3',5,5'-Tetraethyl-4,4'-diaminodiphenylmethan (M-DEA), 3,3',5,5'-Tetraethyl-2,2'-dichlor-4,4'-diaminodiphenylmethan (M-CDEA), 3,3'-Diisopropyl-5,5'-dimethyl-4,4'-Diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzol-sulfonamid, 5,5'-Methylendianthranilsäure, Dimethyl-(5,5'-methylendianthranilat), 1,3-Propylen-bis(4-aminobenzoat), 1,4- Butylen-bis(4-aminobenzoat), 1,2-Bis(2-aminophenylthio)ethan, 4-Chlor-3,5-diaminobenzoesäure-2-methylpropylester und 4-Chlor-3,5-diaminobenzoesäure-tert.-butylester.

Die amingruppenhaltigen Oligomere oder Polymere als Komponente ii) sind vorzugsweise Verbindungen, die aus Umsetzung von Di- oder Polyolen, wie oben für die Herstellung der Oligomere oder Polymer als Komponente i) exemplifiziert, mit aliphatischen oder aromatischen, linearen oder verzweigten, (C₂-C₁₀)Aziridinen mit insbesondere endständiger Aziridingruppe (etwa Ethylenimin oder 1,2-Propylenimin) erhalten werden können. Die Unterscheidung zwischen Oligomer und Polymer ist analog über das massengemittelte Molekulargewicht wie oben für die Unterscheidung zwischen Oligomer und Polymer als Komponente i) beschrieben.

Im Einsatz wird eine wässerige Dispersion, die bereits vorgängig Komponente i) in teilweise deaktivierter Form (siehe oben) und Komponente ii) als einkomponentiges System enthält, oder aus den individuellen Komponenten i) und ii) unmittelbar vor Gebrauch zusammengemischt wird, nach deren Auftragen zur Bildung der Haftvermittlerschicht bis zu einem bestimmten, frei wählbaren Trocknungsgrad bei etwa Raumtemperatur, also 18°C bis 25°C, eintrocknen gelassen, wobei die Isocyanatgruppen aus der Komponente i) mit den Amingruppen aus der Komponente ii) zum Binderpolymer abreagieren.

Es ist für die acrylhaltigen Binderpolymere und die aus einem isocyanathaltigen Monomeren, Oligomeren oder Polymeren und aus einem amingruppenhaltigen Monomeren, Oligomeren oder Polymeren erhaltenen Binderpolymere in den wässerigen Dispersionen eher unerwünscht, dass sie beim Trocknen einen glatten Film bilden; die getrocknete Oberfläche der Haftvermittlerschicht soll eher rauh sein. Daher ist die Mindestfilmbildetemperatur (MFT) dieser Binderpolymere vorzugsweise im Bereich von 20°C bis 40°C. Die MFT ist als die Temperatur definiert, unterhalb der das Polymer in der Haftvermittlerschicht keinen geschlossenen Polymerfilm mehr bildet, und wird für die Zwecke der vorliegenden Anmeldung in Anlehnung an DIN ISO 2115:2001-04 (Ausgabe 2001) bestimmt.

Die erfindungsgemäss verwendbaren Haftvermittlerdispersionen können für die Zwecke der Erfindung einerseits frei von anorganischen Pigmenten und organischen Pigmenten und Farbstoffen sein. Ein Zusatz von solchen Pigmenten oder Farbstoffen kann jedoch im Hinblick auf die bessere Sichtbarkeit der aufgetragenen Schicht der Haftvermittlerdispersion (visuelle Überprüfung der gleichmässigen Auftragungsdicke über die Farbintensität) angebracht sein. Beispiele für anorganische Pigmente, die vorhanden oder abwesend sein können, sind z.B. Ti-, Fe-, Cu-, Cr-, Cd-, Hg-, Co-, Mn-, Sb-, Pb-, Zn- und S-haltige anorganische Verbindungen unabhängig von ihrer Löslichkeit in Wasser bei Raumtemperatur. Wenn die Haftvermittlerdispersion "frei" von solchen anorganischen Pigmenten ist, wird diese "Freiheit" mittels Röntgenfluoreszenz an der Haftvermittlerdispersion selber bestimmt und ist dergestalt, dass der Gehalt jedes der vorstehenden Metalle vorzugsweise weniger als 0,1 Gew.-%, eher bevorzugt weniger als 0,01 Gew.-%, bezogen auf die Dispersion, betragen soll. Als organische Pigmente und Farbstoffe, die vorhanden oder abwesend sein können, gelten unabhängig von ihrer Löslichkeit in Wasser bei Raumtemperatur insbesondere Cyanine; Diazoverbindungen; Lacke gebildet aus Metallsalzen von organischen aromatischen Sulfonsäureverbindungen oder Anthrachinonderivaten; Perylene; Quinacridone; Isoindoline; Flavanthrone; Dioxazine; und Graphit/Russ. Wenn die Haftvermittlerdispersion "frei" von solchen organischen Pigmenten und Farbstoffen ist, wird diese "Freiheit" durch quantitative Extraktion aus der Dispersion (allenfalls nach Einstellung des pH's auf einen geeigneten Wert, der das Pigment oder den Farbstoff neutralisiert und wasserunlöslich macht) mit einem geeigneten nichtmischbaren Lösungsmittel und UV-VIS-Spektroskopie an den vereinigten Extrakten bestimmt und beträgt, nach Eindampfen der Extrakte, vorzugsweise nicht mehr als 0,1 Gew.-%, eher bevorzugt nicht mehr als 0,01 Gew.-%, bezogen auf die Dispersion, an Trockenmasse als Gesamtmenge aller so extrahierten organischen Pigmente und Farbstoffe.

Erfindungsgemäss einsetzbare wässerigen Haftvermittlerdispersionen sind auch auf dem Markt erhältlich: im Fall der acrylathaltigen Binderpolymere etwa von den Herstellern Mapei, Botament, Lugato und Caparol; im Falle des ein- oder zweikomponentigen isocyanathaltigen Binderpolymere etwa von den Herstellern Dow Chemical, Koyo Sangyo Co. und BASF.

Allen Schichten des erfindungsgemässen Verbundelements, insbesondere dem Kern und den beiden Deckschichten, können gewünschtenfalls übliche, insbesondere anorganische Flammhemmer, wie etwa B₂O₃, Al(OH)₃ oder Polyphosphat, in flammhemmenden Mengen, also in typischerweise 5 bis 30 Gew.-%, bezogen auf die fragliche Schicht, beigemischt werden.

Die Herstellung des erfindungsgemässen Verbundelements kann aus den einzelnen Lagen mittels Kalander, Heizpressen oder Vakuumpressen, oder, wenn eine Lage aus einem Thermoplasten oder einem thermoplastischen Elastomeren (insbesondere wenn es ich um die erste und/oder zweite Deckschicht handelt) zum Einsatz kommen soll, mittels Extrusionsbeschichtung unter Verwendung einer Breitschlitzdüse erfolgen. Bevorzugt werden erste Deckschicht und Kern, und Kern und zweite Deckschicht, unter Verwendung eines heissschmelzenden thermoplastischen Klebers oder eines duroplastischen Klebers (insbesondere eines Polyurethans) miteinander verklebt. Typischerweise werden so alle Lagen des erfindungsgemässen Verbundelementes einschliesslich der allenfalls verwendeten Kleber-Zwischenschichten, aber abgesehen von der Haftvermittlerschicht, zusammengefügt und verpresst, danach wird der Haftvermittler in Form der wässerigen Dispersion auf die zweite Deckschicht, etwa durch Rakeln oder im "Kiss-Coating"-Verfahren oder mittels Aufrollen von Hand mit einer Rolle, aufgetragen und das Dispersionswasser bis zum gewünschten Trocknungsgrad eingetrocknet. Dabei entsteht die Haftvermittlerschicht mit dem Binderpolymeren. Im erfindungsgemässen Verbundelement bildet die Haftvermittlerschicht die rückseitige äusserste Schicht, die beim Verbauen des Verbundelements die Haftvermittlung zwischen der zweiten Deckschicht und dem zementösen Mörtel bewirkt. Im erfindungsgemässen Verbundelement für sich betrachtet sind also auf der Haftvermittlerschicht keine weiteren Schichten angeordnet.

Das erfindungsgemässe Verbundelement kann planar ausgebildet sein. Die geometrische Form eines solchen planaren Verbundelements kann beliebig sein. Es kann einerseits direkt in der gewünschten geometrischen Form hergestellt werden oder aus einer grösseren Form, etwa einer Breitbahn, herausgesägt oder herausgeschnitten werden. Eine bevorzugte geometrische Form eines solchen planaren Verbundelements ist eine etwa rechteckige oder quadratische Form. Gewünschtenfalls können nachträglich an die jeweilige Verwendung angepasste Löcher oder Aussparungen in das Verbundelement gefräst oder gebohrt werden. In dieser planaren Ausführungsform kann es gewünschtenfalls an zwei der vier Seiten mit Wülsten und an den anderen beiden Seiten mit passgenauen Nuten versehen sein. Einerseits können Wülste an zwei aneinander angrenzenden Seiten und Nuten an den beiden anderen aneinander angrenzenden Seiten angebracht sein, andererseits können Wülste an zwei gegenüberliegenden Seiten und Nuten an den beiden anderen gegenüberliegenden Seiten angebracht sein. Dadurch kann eine zusätzliche mechanische Verzahnung zwischen benachbart verbauten Verbundelemente erzielt werden, Das erfindungsgemässe Verbundelement kann aber auch unter Verwendung geeigneter Pressmatrizen in jeder beliebig gebogenen flächigen Form hergestellt werden. Sofern an jeder Stelle der Krümmungsradius des Verbundelements gross ist gegenüber der Gesamtdicke des Verbundelements an dieser Stelle, also z.B. dass an jeder Stelle des Verbundelements das Verhältnis von Krümmungsradius zu Gesamtdicke mindestens 100:1, bevorzugt mindestens 500:1, beträgt, kann das Verbundelement direkt aus den Einzelkomponenten unter Verwendung geeigneter Matrizen gepresst werden. Für geringere Krümmungsradien kann die zweite Deckschicht ein- oder mehrfach aufgeschnitten und so ausgeschnittene Teile davon entfernt werden. Die so gebildeten Lücken in der zweiten Deckschicht erlauben eine sehr hohe konvexe (von der ersten Deckschicht aus gesehen) Biegung, wobei die besagten Lücken in der zweiten Deckschicht durch deren Zusammendrücken unter starkem Biegen wieder geschlossen werden. Das erfindungsgemässe Verbundelement eignet sich also nicht nur im Bausektor als Fliesenersatz und zur Wand- oder Bodenverkleidung, es könnte auch als Karrosseriebauteil oder Innenverkleidungsbauteil im Schiff-, Fahrzeug- und Flugzeugbau verwendet werden.

Ein bevorzugtes Einsatzgebiet des erfindungsgemässen Verbundelements liegt in der Beschichtung von stehenden oder liegenden mineralischen Untergründen, also Böden, Wänden und Decken aus einem mineralischen Untergrund, etwa aus Ziegelstein oder Beton. Hierzu wird das fertige Verbundelement über die Haftvermittlerschicht unter Verwendung eines zementösen Mörtels auf dem mineralischen Untergrund befestigt.

Als "zementöser Mörtel" wird im Rahmen der vorliegenden Erfindung ein hydraulisch abbindender Mörtel verstanden, der als Bindemittel Zement und Kalk in ein Gewichtsverhältnis Zement:Kalk von mindestens 50:50, bevorzugt von mindestens 90:10 aufweist, und der Gestein in einer Körnung von maximal 4 mm, vorzugsweise maximal 3 mm enthält. Der Zement innerhalb des zementösen Mörtels kann von jeder der fünf Hauptkategorien nach EN 197-1 reiner Portlandzement (CEM I), Portland-Kompositzement (CEM II), Hochofenzement (CEM III), Puzzolanzement (CEM IV) und Kompositzement (CEM V) sein, wobei für den in all diesen Zementarten enthaltenen reinen Portlandzement selber die typischen hauptsächlichen Ausgangsmaterialien 58 bis 66 Gew.-% CaO, 18 bis 26 Gew.-% SiO₂, 4 bis 10 Gew.-% Al₂O₃ und 2 bis 5 Gew.-% Prozent Fe₂O₃ und deren Versinterung bei 1400-1450°C massgeblich sind. Typische erfindungsgemäss einsetzbare zementöse Mörtel sind in einer der Einteilungen MG 2, MG 2a, MG 3 und MG 3a gemäss alter Norm DIN 18550 eingeteilt.

Der erfindungsgemässe zementöse Mörtel enthält neben dem vorstehend beschriebenen Zement vorzugsweise auch einen elastifizierenden Kunststoff, dergestalt, dass das Mengenverhältnis von Zement zu elastifizierendem Kunststoff typisch im Bereich von 90:10 bis 70:30 liegt. Diese elastifizierenden Kunststoffe sind als Zusätze in zementösen Mörteln an sich bekannt. Beispiele von einsetzbaren elastifizierenden Kunststoffen sind:
a) radikalisch polymerisierte Homo- und Copolymerisate von vinylischen Monomeren. Die vinylische Monomere sind typisch ausgewählt aus der Gruppe bestehend (Meth)acrylsäureestern mit 1 bis 5 Kohlenstoffatomen im veresternden Rest (wie z.B. Methyl(meth)acrylat, Ethyl(meth)acrylat), Vinylester (wie etwa Vinylacetat, Vinylpropionat, Vinylbutyrat, Vinyl-2-ethylhexoat, Vinylisononat, Vinylstearat, Vinyllaurat), Olefine ohne funktionelle Gruppen (wie z.B. Ethylen und lineare oder verzweigte α-Olefine mit 3 bis 8 Kohlenstoffatomen), Vinylhalogenide (wie etwa Vinylchlorid, Vinylidenchlorid, Vinylfluorid, Vinylidenfluorid) und aromatische Olefine (wie etwa Styrol, α-Methylstyrol und Divinylbenzol).
b) Durch Polymerisation von Monomeren mit zwei oder mehr Epoxygruppen mit Di- oder Polyolen hergestellte Polymerisate. Die Monomere mit zwei oder mehr Epoxygruppen sind typisch Reaktionsprodukte von Epichlorhydrin mit Di- oder Polyolen, die ihrerseits bevorzugt ausgewählt sind aus der Gruppe bestehend aus monomeren oder bereits selber oligomeren oder polymeren Polyetherdi- oder -polyolen oder Polyesterdi- oder -polyolen und Bisphenol A und/oder F.

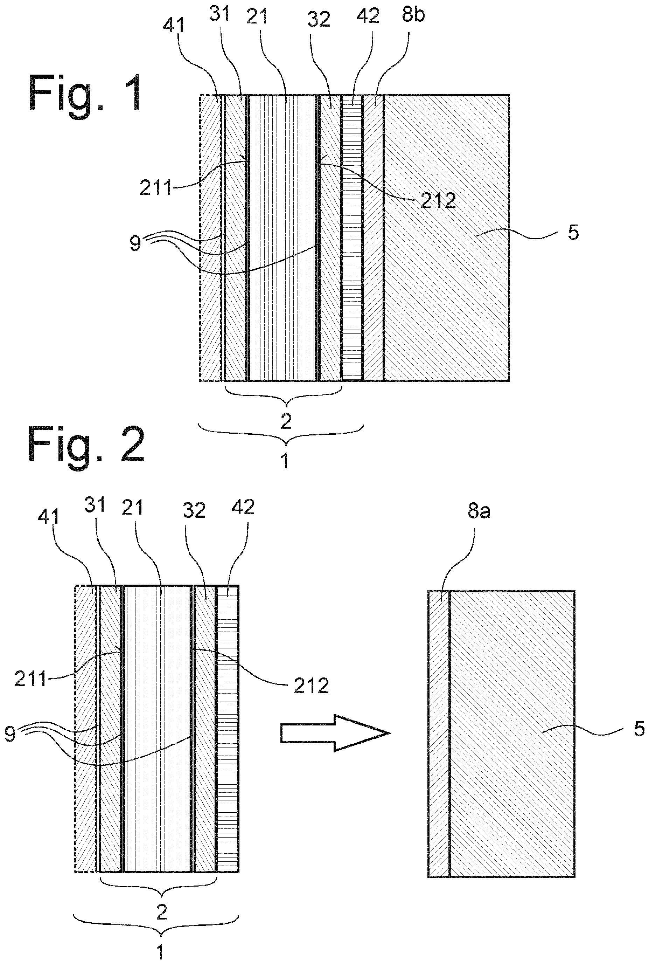

Neben dem Verbundelement selber ist auch ein stehender oder liegender mineralischer Untergrund, der mit einem solchen Verbundelement unter Verwendung eines zementösen Mörtels beschichtet ist, Gegenstand der vorliegenden Erfindung. Dabei dient die Haftvermittlerschicht des Verbundelements als Verbindung zwischen seiner Sandwichplatte und dem zementösen Mörtel. Im so beschichteten mineralischen Untergrund kommt also die Schicht des abgebundenen zementösen Mörtels (8b) zwischen der Haftvermittlerschicht (42) und dem mineralischen Untergrund (5) zu liegen. Bevorzugte Varianten dieser beiden erfindungsgemässen Gegenstände werden unter Bezug auf Fig.1 erläutert.

Ein erfindungsgemäss bevorzugtes Verbundelement 1 weist eine Sandwichplatte 2 auf, die wiederum einen Kern 21, etwa aus geschäumtem Polyethylenterephthalat (PET) enthält. Auf der ersten Kernoberfläche 211 ist eine erste Deckschicht 31 aufgebracht, die entweder bereits selber eine Dekorschicht ist oder z.B. aus einem Fiberglas (epoxyharzverstärktes Glasfasergewebe) bestehen kann und dann ihr auf der eine zusätzliche, gestrichelt gezeichnete optionale Dekorschicht 41 aufgebracht ist. Die als Dekorschicht ausgebildete erste Deckschicht 31 oder die allenfalls vorhandene zusätzliche Dekorschicht 41 ist ein typisch 0,2 bis 5 mm dickes vollflächiges Steinfurnier (z.B. "SkinRock^{®}"). Auf der zweiten Kernoberfläche 212 ist eine zweite Deckschicht 32, etwa aus einer glasfaserverstärkten PET-Folie, aufgebracht. Auf der zweiten Deckschicht 32 wiederum ist eine Haftvermittlerschicht 42 aufgebracht, enthaltend etwa ein acrylathaltiges Binderpolymer. Der Verbund aus Kern 21, erster Deckschicht 31, optionaler Dekorschicht 41 und zweiter Deckschicht 32 ist in einem Arbeitsgang in einer Durchlaufpresse unter Heizen und Druck herstellbar, wobei gewünschtenfalls, aber bevorzugt ein duroplastischer Polyurethankleber 9 zwischen den einzelnen Lagen eingesetzt wird. Danach wird die zweite Deckschicht 42 mit dem Haftvermittler mit acrylathaltigem Binderpolymer in Form der wässerigen Dispersion behandelt. Das fertige Verbundelement ist unter Verwendung einer Schicht eines abgebundenen, ausgehärteten zementösen Mörtels 8b an einem mineralischen Untergrund 5 angebracht.

Als "mineralischer Untergrund" werden im Rahmen der vorliegenden Erfindung alle Arten von anorganischen festen Baumaterialien verstanden, die als Hauptkomponenten, z.B. zu mindestens 70 Gew.-%, Al₂O₃ und SiO₂ sowie ihre Mischverbindungen enthalten. Beispiele für mineralische Untergrunde sind Backsteine und daraus aufgebaute Mauern und Decken, Klinker und mit Klinkern verkleidete Mauern, Schamottesteine und daraus aufgebaute Mauern, Natursteine und daraus aufgebaute Mauern, Betonmauern, Betonböden, Betondecken oder Betonbauelemente. Bevorzuge mineralische Untergründe sind Backsteinmauern, Betonmauern, Betonböden, Betondecken oder Betonbauelemente.

Gegenstand der vorliegenden Erfindung ist auch ein Verfahren zum Verkleiden eines mineralischen Untergrundes 5, wie vorstehend definiert, unter Verwendung eines erfindungsgemässen Verbundelements 1. Dieses Verfahren ist unter Bezug auf Fig.2 beschrieben. Das Verbundelement 1 (die Bezugszeichen 2, 9, 21, 211, 212, 31, 32, 41 und 42 haben dieselbe Bedeutung wie in Fig.1) wird vorgängig bereitgestellt. Ein nicht abgebundener zementöser Mörtel 8a, enthaltend Wasser in einer Menge nach Wasserzementwert des Mörtels, wird auf den mineralischen Untergrund 5 (wie in Fig.2 gezeigt) und/oder die Haftvermittlerschicht 42 mittels eines fachüblichen Applikators, etwa eines Mörtelkamms oder einer Maurerkelle, appliziert und dann, gewünschtenfalls nach einer gewissen Abbindezeit des Mörtels, das erfindungsgemässe Verbundelement 1 so mit dem mineralischen Untergrund 5 verbunden, dass die Mörtelschicht 8a zwischen die Haftvermittlerschicht 42 und dem mineralischen Untergrund 5 zu liegen kommt. Der nicht abgebundene oder gewünschtenfalls teilweise abgebundene Mörtel 8a wird danach zum abgebundenen Mörtel 8b ausgehärtet gelassen, wobei fakultativ, aber nicht zwingend, das Verbundelement 1 mit leichtem Anpressdruck am mineralischen Untergrund 5 festgedrückt werden kann.

Die Vorteile des erfindungsgemässen Verbundelements gegenüber massiven Natursteinplatten, Keramikplatten, Feinsteinzeugplatten und Fliesen sind die Herstellbarkeit grosser Formate, das leichtere Gewicht, die einfache Applikation und die flexible Bearbeitung. Das erfindungsgemässe Verbundelement, wenn es mit einer Dekorschicht versehen ist, benötigt viel weniger aus natürlichen Quellen stammende Dekor-Ressourcen, weil die Dekorschicht nur sehr dünn ausgestaltet sein kann. Aufgrund des geringeren Gewichts und der geringeren Neigung zum Bruch oder Absplittern (hauptsächlich kunststoffbasiert) ist die Gefahr von Materialtransportschäden und von Schäden bei der Handhabung und/oder Bearbeitung und/oder beim Einbau stark vermindert. Soweit es sich um thermoplastische Materialien handelt, können die einzelnen Schichten des erfindungsgemässen Verbundelements einfach rezykliert werden.

### Beispiel: Verwendung eines erfindungsgemässen Verbundelements als Fliesenersatz auf einer Betonwand

Ein Verbundelement ähnlich demjenigen von Fig. 2, linke Seite, bestehend aus einer Dekorschicht (Steinfurnier) von 1.5 mm Dicke als erster Deckschicht, einem Kern mit 7 mm Dicke aus geschäumtem PET und einer zweiten Deckschicht aus 1.5 mm dickem glasfaserverstärktem Epoxyharz, alle Lagen mit einem Polyurethankleber miteinander verklebt, wird bereitgestellt.

Auf die zweite Deckschicht wird ein handelsüblicher Haftvermittler mit einem acrylathaltigen Binderpolymer und Magnesit als Füllstoff in Form einer wässerigen Dispersion mit einer Rolle in einer Menge von ca. 100 g/m² aufgetragen und die Dispersion bei Raumtemperatur eintrocknen gelassen.

Ein handelsüblicher zementöser Fliesenmörtel mit elastifizierendem Kunststoff wird auf die zu verkleidende Betonwand mit einer Traufel in einer Menge von ca. 2.5 kg/m² aufgetragen.

Das Verbundelement wird mit dem aufgetragenen, eingetrockneten Haftvermittler auf den noch feuchten Mörtel aufgesetzt. leicht angedrückt und der Mörtel wird abbinden gelassen.

## Patentansprüche

1. Verbundelement (1), umfassend
a) eine Sandwichplatte (2), die ihrerseits umfasst oder besteht aus:
a1) einem Kern (21) mit einer ersten Kernoberfläche (211) und einer zweiten Kernoberfläche (212),
a2) einer auf der ersten Kernoberfläche (211) aufgebrachten ersten Deckschicht (31) und
a3) einer auf der zweiten Kernoberfläche (212) aufgebrachten zweiten Deckschicht (32);
b) einer auf der zweiten Deckschicht (32) aufgetragenen Haftvermittlerschicht (42) mit
b1) einem acrylathaltigen Binderpolymer oder
b2) einem aus i) einem isocyanathaltigen Monomeren, Oligomeren oder Polymeren und ii) einem amingruppenhaltigen Monomeren, Oligomeren oder Polymeren erhaltenen Binderpolymer.

2. Verbundelement (1) nach Anspruch 1, **dadurch gekennzeichnet, dass** der Kern (21) einem Thermoplasten, einen thermoplastischen Elastomeren, einen gewünschtenfalls faserverstärkten oder mit Holzspänen versetzten Duroplasten oder Holz umfasst, oder daraus besteht.

3. Verbundelement nach Anspruch 1 oder 2, **dadurch gekennzeichnet, dass** die erste Deckschicht (31) und/oder die zweite Deckschicht (32) aus Hochdrucklaminat (HPL); einem Thermoplasten; einem thermoplastischen Elastomeren; einem Duroplasten, allenfalls mit Faserverstärkung oder mit Holzspanbeimengung; aus Aluminium oder einer Aluminiumlegierung bestehen, und auf der ersten Deckschicht (31) eine zusätzliche Dekorschicht (41) aufgebracht ist.

4. Verbundelement nach Anspruch 1 oder 2, **dadurch gekennzeichnet, dass** die erste Deckschicht (31) eine Dekorschicht ist.

5. Verbundelement nach einem der Ansprüche 1 bis 4, **dadurch gekennzeichnet, dass** die Haftvermittlerschicht (42) ein acrylathaltiges Binderpolymer umfasst, das repetitive Einheiten enthält, die abgeleitet sind von:
a) 1 bis 60 Gew.-% (Meth)acrylsäure;
b) 1 bis 60 Gew.-% von einem oder mehreren (C₁-C₄)-Alkylestern der (Meth)acrylsäure;
c) 0 bis 20 Gew.-% von einem oder mehreren vinylaromatischen Monomeren; und
d) 0 bis 20 Gew.-% eines oder mehrerer amid- und/oder nitrilhaltiger vinylischer Monomere;
mit der Massgabe, dass die Summe der Gewichtsprozente der Monomeren a)-d) 100% des acrylhaltigen Polymeren ergibt.

6. Verbundelement nach einem der Ansprüche 1 bis 4, **dadurch gekennzeichnet, dass** die Haftvermittlerschicht (42) ein aus i) einem isocyanathaltigen Monomeren und ii) einem amingruppenhaltigen Monomeren erhaltenes Binderpolymer umfasst.

7. Verbundelement nach einem der Ansprüche 1 bis 6, in einer planaren, insbesondere rechteckigen oder quadratischen Form oder in einer flächigen, gebogenen Form.

8. Mineralischer Untergrund (5), der mit einem Verbundelement nach einem der Ansprüche 1 bis 7 und mittels einer Schicht eines abgebundenen zementösen Mörtels (8b) dergestalt beschichtet ist, dass die Schicht des abgebundenen zementösen Mörtels (8b) zwischen der Haftvermittlerschicht (42) und dem mineralischen Untergrund (5) angeordnet ist.

9. Verfahren zur Verkleidung eines stehenden oder liegenden mineralischen Untergrunds (5), umfassend die Schritte:
- Bereitstellen eines Verbundelements (1) nach einem der Ansprüche 1 bis 8 und des mineralischen Untergrunds (5);
- Bestreichen des mineralischen Untergrunds (5) und/oder der Haftvermittlerschicht (42) mit einem hydraulisch abbindbaren zementösen Mörtel (8a);
- gewünschtenfalls teilweises Abbindenlassen des hydraulisch abbindbaren zementösen Mörtels (8a);
- Aufbringen des Verbundelements (1) auf den mineralischen Untergrund (5), dergestalt, dass die Haftvermittlerschicht (42) zwischen der zweiten Deckschicht (32) und dem hydraulisch abbindbaren, gewünschtenfalls teilweise abgebundenen zementösen Mörtel (8a) liegt; und
- Abbindenlassen des hydraulisch abbindbaren, gewünschtenfalls teilweise abgebundenen zementösen Mörtel (8a) zum ausgehärteten, abgebundenen zementösen Mörtel (8b).

10. Verwendung eines Verbundelements (1) nach einem der Ansprüche 1 bis 8 als Fliesenersatz und zur Wand- oder Bodenverkleidung, als Karrosseriebauteil oder als Innenverkleidungsbauteil im Schiff-, Fahrzeug- und Flugzeugbau.
